# EUROPEAN PATENT SPECIFICATION

(11) **EP 0 511 717 B1**
(45) Date of publication and mention of the grant of the patent: **05.10.1994**
(21) Application number: 92201648.0
(22) Date of filing: 05.06.1992
(51) Int. Cl.: A01G 9/14

(54) **Glasshouse and gutter edge profile therefor**
Gewächshaus und Rinnenkantenprofil dafür
Serre et profilé de bord de gouttière pour celle-ci

(30) Priority: 07.06.1991 BE 9100552; 19.02.1992 BE 9200171
(43) Date of publication of application: 04.11.1992
(73) Proprietor: P.L.J. BOM BEHEER B.V., 2671 CV Naaldwijk (NL)
(72) Inventor: Bom, Petrus Leonardus Josef, NL-3155 BB Maasland (NL)
(74) Representative: Konings, Lucien Marie Cornelis Joseph

(56) References cited:
- EP-A- 0 345 238
- NL-A- 8 901 194
- US-A- 1 930 750

## Description

The invention relates to a glasshouse as according to the preamble of claim 1.

Such a glasshouse is disclosed in NL-A-8901194. Therein the condensate is caught in a gutter bounded by a flange 13 and is guided onto the ends of the profile 10, where it may flow between the ends of the profile 10 and the sides of the rods 6 into the inner space of the gutter 4, where the contaminated condensate is combined with the rain water.

Much condensation is deposited against the cold glassplates in glasshouses. This condensation is often contaminated by spray agents or other contaminants. In such case it may not be released into ditches together with rain water, but must be collected separately and drained separately. It is important herein that it does not fall under the gutters at the same places onto the crop.

In EP-A-0 345 238 the gutter edge profiles are so shaped that a flange directed away from the rain gutter bounds a small gutter shaped space wherein condensate is caught. The condensate in this space flows to the lowest part of this gutter shaped space due to the fact that the rain gutter is not exactly horizontally arranged. This means that the water in said space flows in the direction of the gutter edge profile, where it has its lowest point. There the condensate will flow over the outer edge of said outwardly directed flange onto the crop, which will be damaged.

US-A-1930750 discloses a glasshouse having a rain water gutter with a condensation gutter therebelow. The glassplates lie directly on edges of the rain water gutter and are connected to said rain water gutter by means of brackets located near the roof bars only. The condensate flows from the glass along the roof side of the gutter into said condensate gutter. The roof bars are connected to the gutter by said brackets. THe gutter edges must have recesses for receiving the upper parts of said brackets. The glassplates rest against the upper parts of the brackets, which means that in their plane they are only locally supported.

The invention has for its object to provide a glasshouse in which the condensation is properly collected in the vicinity of the gutter and is separately collected from the rain water.

For this purpose the glasshouse according to the invention has the characteristic of claim 1.

The invention also relates to and provides a gutter edge profile evidently intended for a glasshouse according to the invention.

The invention will be elucidated in the description following hereinafter on the basis of embodiments with reference to drawings, in which, by way of non-limiting examples:

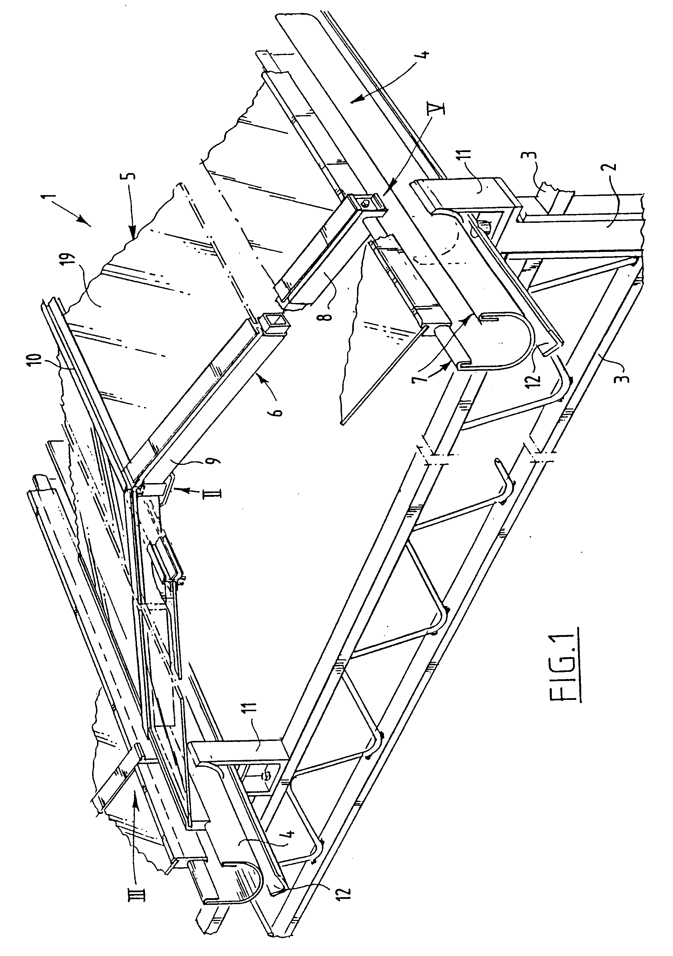

Figure 1 shows a broken away perspective view of a fraction of a glasshouse according to the invention;
Figures 2 and 3 show a section of details II and III respectively from figure 1;

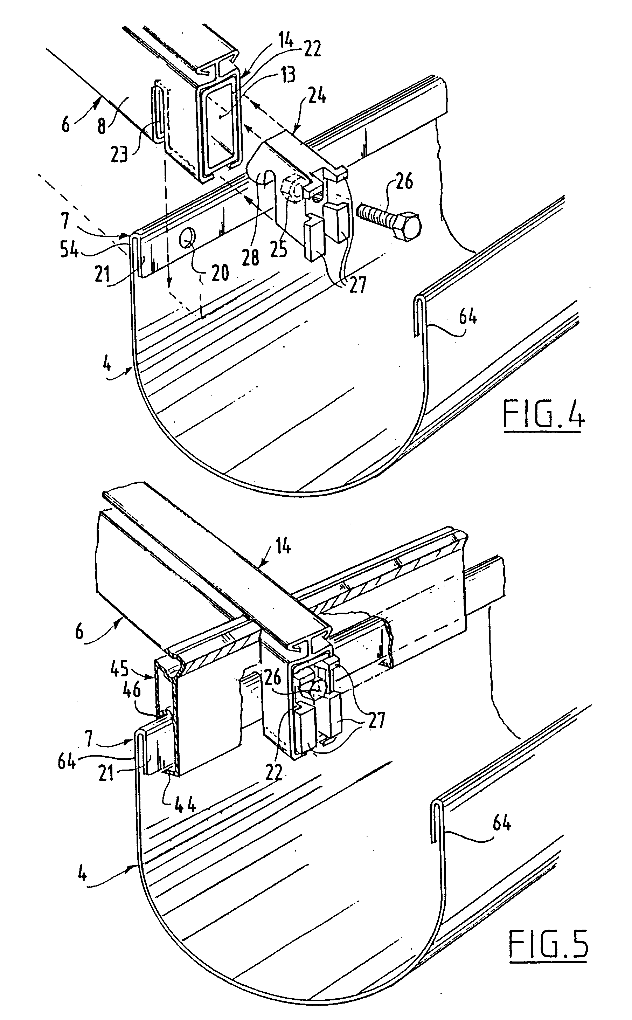

Figures 4 and 5 show perspective views of detail V in figure 1 respectively in disassembled and assembled state;
Figure 6 is an exploded perspective view of detail II in figure 1; and
Figures 7-10 show variants of figure 3.

The glasshouse 1 comprises a frame of pillars 2, parallel trusses 3 supported by the pillars 2 and gutters 4 directed transversely of the trusses 3, and further comprises glass side walls (not shown). The gutters 4 support the roof 5 which comprises parallel bars 6 arranged at regular mutual distances which are fixed with their bottom ends 8 to gutter edges 7 and which are fixed with their top ends 9 to ridge profiles 10. The gutters 4 are fixed to the pillars 2 and/or the trusses 3 by means of gutter supports 11, wherein condensation drain gutters 12 are also present under the gutters 4.

Each gutter 4 is made from bent steel plate, wherein the gutter edges 7 are bent downward and inward through 180°. These gutters 4 combine a considerable resistance moment against bending with a compact shape which keeps out little light.

Each bar 6 consists of a simple tubular, rectangular, steel bar profile 13 and a glass strip profile 14 whereof downward directed flanges 15 cover the sides of the bar profile 13 and grip round the underside of the bar profile 13. The top side of the bar profile 13 is covered by flanges 16 of the glass strip profile 14, which flanges 16 are connected to the upper flanges 17 which have slantingly oriented glass press-on edges 18. Glass plates 19 are received between flanges 16 and 17, this in elastic manner without rattling and therefore with little danger of glass breakage. Because of the covering of the bar profile 13 by the glass strip profile 14 the bar profile 13 is isolated and depositing of condensation on the bar 6 is greatly reduced, if not avoided. The glass strip profile 14 is preferably made of lightly coloured, light reflecting plastic, which increases the crop production of the glasshouse 1. The compact shape of the tubular bar profile 13 with great resistance moment also contributes to the increase in crop production because the bar 6 keeps out little light. The roof 5 is herein still of robust design. With the bar 6 a considerable span between ridge profile 10 and gutter 4 can be realized without girders located there-between. The tubular bar profiles can be of rectangular, square, trapezoidal, triangular or other shape. According to figure 7 the bar profile 13 consists of a round steel tube and the glass strip profile 14 is adapted thereto and has round gripping flanges 15.

The gutter edges 7 have from place to place, where the bars 6 have to be mounted, openings 20 punched out in the downward edges 21 prior to bending, while the opposite gutter piece 54 remains closed. The bar 6 has on its bottom end 8 a recessed transverse channel 23 to receive a gutter edge 7. Prior to assembly a plastic fixing member 24 is pushed into the bar profile 13 in which member a nut 25 or a screw hole is present. After the bar 6 has been placed onto the gutter edge 7 a screw 26 is tightened such that the end thereof protrudes through the opening 20 for locking the bar 6 on the gutter edge 7. The fixing member 24 has stops 27 to the sides with which it strikes against the head end surface 22 of the bar 6 in order to adjust the insertion depth thereof. In the assembled situation a locking piece 28 of the fixing member 24 grips behind the gutter edge 7.

The top ends 9 of the bars 6 are fixed as according to figure 6 to a ridge profile 10, which has a bolt head chamber 29 for receiving the head 30 of a bolt 31. The ridge profile 10 has two top flanges 32 and two bottom flanges 33 which incline slanting downward and between which glass plates 19 are received as well as a window pivot flange 34. The bolt 31 protrudes through a support member 35 of plastic which is provided on its top end with flanges 36 which separate the ridge profile 10 of aluminium from the steel bar profile 13, thus avoiding considerable rust forming. The glass strip profile 14 of the bar 6 has a recess at the location of the flanges 32, 33 or is wholly absent at that position. A clamping piece 37 grips with fingers 38 into holes 39 of bar profiles 13 and, by means of a nut 40 and bolt 31, clamps the top ends 9 firmly and fixedly on the ridge profile 10 which has a small height.

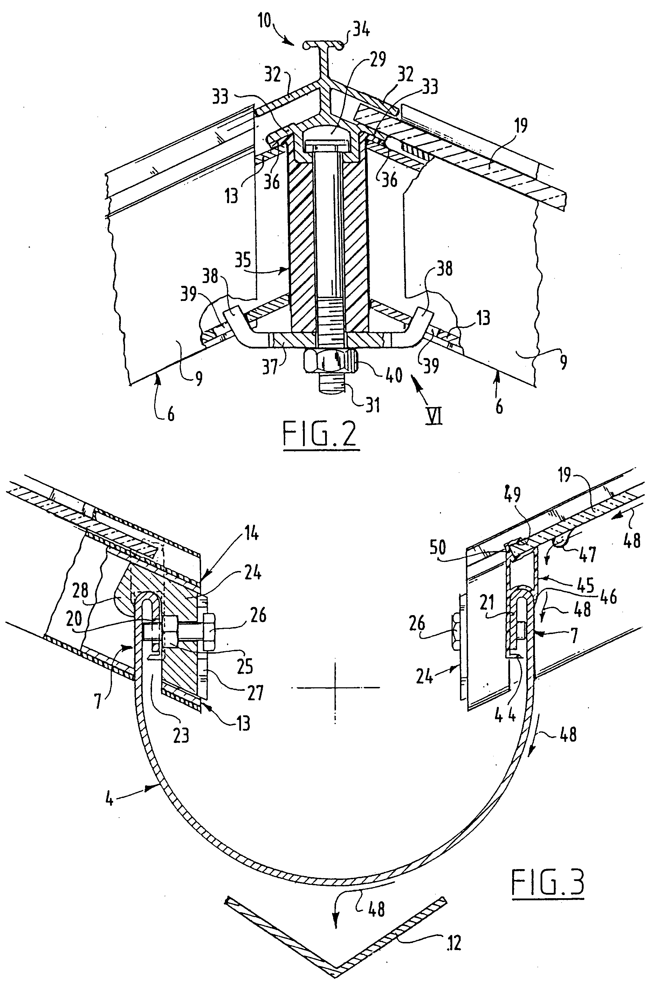

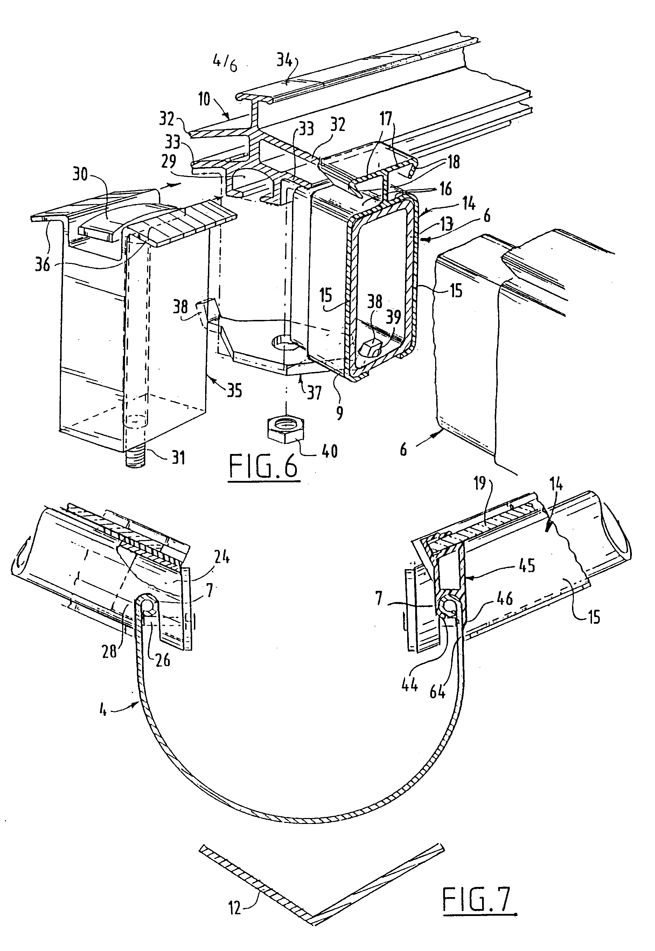

According to figures 3 and 5 a hollow gutter edge profile 45 of plastic hooks with a hooking edge 44 under the edge 21 of the gutter edge 9 while a downward directed flow-off edge 46 is disposed relative to the gutter such that this flow-off edge 46 delivers the condensation 47 collected by the gutter edge profile 45 from the transparent plate 19 to the outside of an upper portion 64 of the gutter 4. The flow-off edge 46 is situated at a short distance from an outer surface of the upper portion 64 of the gutter 4 such that the condensation falls onto this outer surface without splashing too much. This distance is preferably so small that a drop hanging from the flow-off edge 46 already makes contact with the outer surface of the upper portion 64. The flow-off edge 46 preferably connects smoothly onto the upper portion 64 of the gutter 4 such that condensation 47 is easily guided according to arrows 48 from the glass plate 19 along the gutter edge profile 45, and in particular the flow-off edge 46 thereof, along the side of the gutter 4 into the condensation gutter 12. This gutter edge profile 45 further has a top piece with a groove 49 for elastically receiving a glass plate 19 therein.

According to figure 7 the steel gutter 4 has a bent gutter edge 7 in the form of an inward bead. The locking piece 28 of the fixing member 24 and the flow-off edge 46 and the hooking edge 44 of the gutter edge profile 45 are adapted thereto. The bolt 26 engages in this case under the gutter edge 7 in the form of a bead.

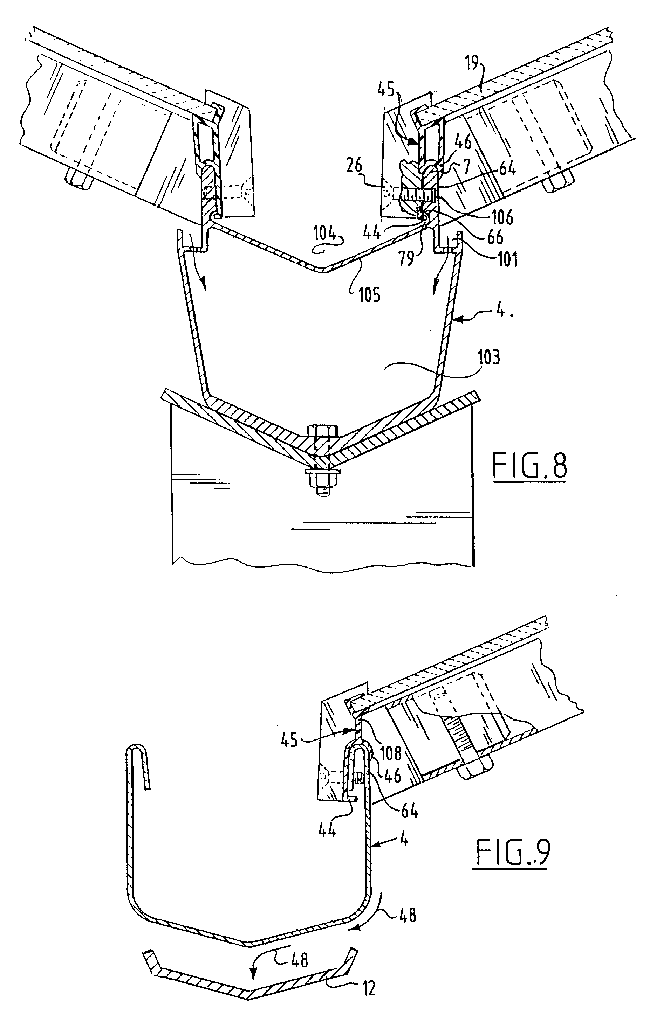

According to figure 8 the gutter 4 consists of an aluminium profile with a thick vertical gutter edge 7 onto which the gutter edge profile 45 connects with its flow-off edge 46 so that the condensation from the glass plate 19 flows from the flow-off edge 46 onto this vertical gutter edge 7, further along the gutter edge 7 into a condensation collecting gutter 101 and via an opening 102 thereof into the innermost gutter 103 of the gutter 4 which forms a condensation gutter. The rain gutter 104 is formed by the top wall 105, the gutter edges 7 and, in the case of heavy rainfall, also by the gutter edge profiles 45 and the glass plates 19. The bolt 26 of the bar fixing engages into an inner groove 106 of the gutter edge 7 while the hooking edge 44 of the gutter edge profile 45 grips under an edge 66 of a gutter groove 79.

According to figure 9 the gutter edge profile 45 has a profiled body 108 of solid plastic material.

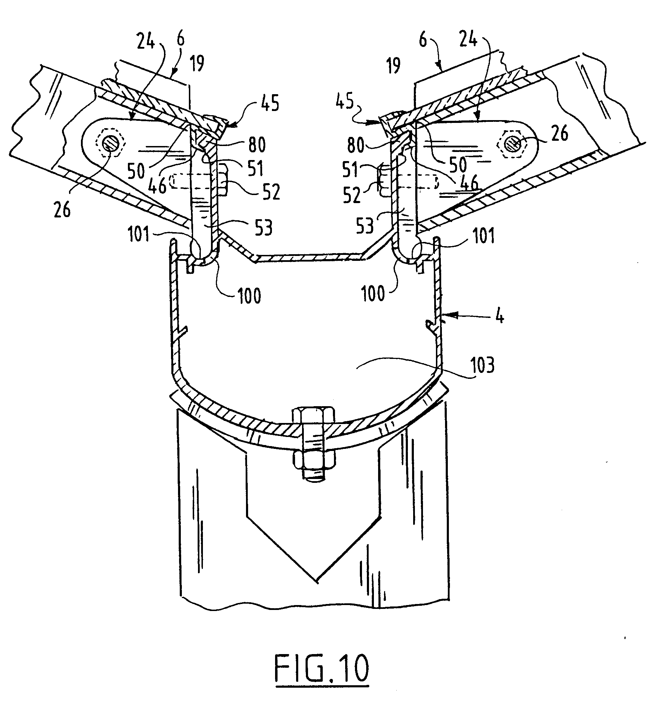

The gutter 4 of figure 10 has a top piece whereof thick flanges 80 directed slanting upward and outward each receive an S-shaped gutter edge profile 45.

The condensation is scraped off the glass plate 19 by each sharp bend 50 of the gutter edge profile 45 and is then delivered by the flow-off edge 46 to the outside 51 of the gutter 4, whereafter it then flows downward into a condensation collecting gutter 101 to fall therefrom via an opening 100 into the gutter 103. Each bar 6 of aluminium is fixed by means of a screw 26 to a fixing member 24 which is pushed into the tubular bar 6 which is fixedly screwed by means of a screw 52 against the outside of the gutter 4 and which supports with its support 53 in the collecting gutter 101. This gutter edge profile 45 runs through by the bars 6 as a long strip so that a watertight sealing can easily be realized there.

## Claims

1. Glasshouse (1) at least comprising a gutter edge profile (45) arranged on an edge (7) of a gutter (4) and provided with a groove (49) for receiving a transparent plate (19), for example a glass plate, **characterized in that** the gutter edge profile (45) has a downward directed flow-off edge (46) which is disposed relative to the gutter (4) such that this flow-off edge (46) delivers the condensation (47) collected by the gutter edge profile (45) from the transparent plate (19) to the outside of an upper portion of the gutter (4), wherein this condensation is guided downward from this upper portion along the outside of the gutter (4) for collection in a condensation gutter (12, 103).

2. Glasshouse (1) as claimed in claim 1, **characterized in that** the gutter edge profile (45) hooks with a hooking edge (44) under a gutter edge (21).

3. Glasshouse (1) as claimed in claim 1 or 2, **characterized in that** the gutter edge profile (45) is manufactured at least partly from plastic.

4. Glasshouse (1) as claimed in any of the foregoing claims, **characterized in that** the flow-off edge (46) of the gutter edge profile (45) connects to a substantially vertical outer surface of the gutter (4).

5. Glasshouse (1) as claimed in any of the foregoing claims, **characterized in that** the gutter edge profile (45) is tubular.

6. Glasshouse as claimed in any of the foregoing claims, **characterized in that** the gutter (4) has an inwardly bent gutter edge (7).

7. Gutter edge profile (45) to be arranged on an edge (7) of a gutter (4) and provided with a groove (49) for receiving a transparent plate (19), for example a glass plate, **characterized in that** the gutter edge profile (45) has a downward directed flow-off edge (46) which can be disposed relative to the gutter (4) such that this flow-off edge (46) delivers the condensation (47) collected by the gutter edge profile (45) from the transparent plate (19) to the outside of an upper portion of the gutter (4), such that this condensation is guided downward from said upper portion along the outside of said gutter (4) for collection in a condensation gutter (12, 103).

## Patentansprüche

1. Gewächshaus (1) mit wenigstens einem Regenrinnenrandprofil (45), das auf dem Rand (7) einer Regenrinne (4) angeordnet und mit einer Nut (49) zur Aufnahme einer durchsichtigen Platte (19), beispielsweise einer Glasplatte, versehen ist, dadurch gekennzeichnet, daß das Regenrinnenrandprofil (45) eine nach unten gerichtete Abflußkante (46) hat, welche relativ zur Regenrinne (4) derart angeordnet ist, daß die Abflußkante (46) die Kondensation (47), die sich am Regenrinnenrandprofil (45) von der durchsichtigen Platte (19) her ansammelt, an die Außenseite eines oberen Abschnitts der Regenrinne (4) abgibt, woraufhin diese Kondensation von diesem oberen Abschnitt entlang der Außenseite der Regenrinne (4) zur Sammlung in einer Kondensationsrinne (12,103) herabgeleitet wird.

2. Gewächshaus (1) nach Anspruch (1), dadurch gekennzeichnet, daß das Regenrinnenrandprofil (45) mit einer Hakenkante (44) unter einer Kante (21) der Regenrinne hakt.

3. Gewächshaus (1) nach Anspruch 1 oder 2, dadurch gekennzeichnet, daß das Regenrinnenrandprofil (45) wenigstens zum Teil aus Plastik angefertigt ist.

4. Gewächshaus (1) nach einem der vorstehenden Ansprüche, dadurch gekennzeichnet, daß die Abflußkante (46) des Regenrinnenrandprofils (45) an eine im wesentlichen vertikale äußere Oberfläche der Regenrinne (4) anschließt.

5. Gewächshaus (1) nach einem der vorstehenden Ansprüche, dadurch gekennzeichnet, daß das Regenrinnenrandprofil (45) rohrförmig ist.

6. Gewächshaus (1) nach einem der vorstehenden Ansprüche, dadurch gekennzeichnet, daß die Regenrinne (4) eine nach innen gebogene Regenrinnenkante (7) hat.

7. Regenrinnenrandprofil (45), das auf einer Kante (7) einer Regenrinne (4) angeordnet werden soll und mit einer Nut (49) zur Aufnahme einer durchsichtigen Platte (19), beispielsweise einer Glasplatte, versehen ist, dadurch gekennzeichnet, daß das Regenrinnenrandprofil (45) eine nach unten gerichtete Abflußkante (46) hat, welche relativ zur Regenrinne (4) in der Art angeordnet werden kann, daß die Abflußkante (46) die Kondensation (47), die sich am Regenrinnenrandprofil (45) von der durchsichtigen Platte (19) her ansammelt, an die Außenseite eines oberen Abschnitts der Regenrinne (4) abgibt, so daß diese Kondensation vom oberen Abschnitt entlang der Außenseite der Regenrinne (4) zur Sammlung in einer Kondensationsrinne (12,103) herabgeleitet wird.

## Revendications

1. Serre (1) comportant au moins un profilé de bord de gouttière (45) agencé sur un bord (7) d'une gouttière (4) et muni d'une rainure (49) pour recevoir une plaque transparente (19), par exemple une plaque de verre, caractérisée en ce que le profilé de bord de gouttière (45) a un bord d'écoulement (46) dirigé vers le bas qui est placé par rapport à la gouttière (4) de telle manière que le bord d'écoulement (46) délivre vers l'extérieur d'une partie supérieure de la gouttière (4), la condensation (47) collectée par le profilé de bord de gouttière (45) à partir de la plaque transparente (19), cette condensation étant guidée vers le bas à partir de cette partie supérieure, le long de l'extérieur de la gouttière (4) afin d'être collectée dans une gouttière de condensation (12,103).

2. Serre (1) selon la revendication 1, caractérisée en ce que le profilé de bord de gouttière (45) est accroché par un bord d'accrochage (44) sous un bord de gouttière (21).

3. Serre (1) selon la revendication 1 ou 2, caractérisée en ce que le profilé de bord de gouttière (45) est fabriqué au moins partiellement en matériau plastique.

4. Serre (1) selon l'une quelconque des revendications précédentes, caractérisée en ce que le bord d'écoulement (46) du profilé de bord de gouttière (45) est relié à une surface extérieure sensiblement verticale de la gouttière (4).

5. Serre (1) selon l'une quelconque des revendications précédentes, caractérisée en ce que le profilé de bord de gouttière (45) est tubulaire.

6. Serre (1) selon l'une quelconque des revendications précédentes, caractérisée en ce que la gouttière (4) a un bord de gouttière (7) recourbé vers l'intérieur.

7. Profilé de bord de gouttière (45) devant être agencé sur un bord (7) d'une gouttière (4) et muni d'une rainure (49) pour recevoir une plaque transparente (19), par exemple une plaque de verre, caractérisé en ce que le profité de bord de gouttière (45) a un bord d'écoulement (46) dirigé vers le bas qui peut être placé par rapport à la gouttière (4) de telle manière que le bord d'écoulement (46) délivre vers l'extérieur d'une partie supérieure de la gouttière (4), la condensation (47) collectée par le profilé de bord de gouttière (45) à partir de la plaque transparente (19), de sorte que cette condensation est guidée vers le bas à partir de cette partie supérieure, le long de l'extérieur de la gouttière (4) afin d'être coltectée dans une gouttière de condensation (12,103).
